Europäisches Patentamt

European Patent Office

Office européen des brevets

(19)

(11) Numéro de publication: **0 169 769**
**B1**

(12) **FASCICULE DE BREVET EUROPEEN**

(45) Date de publication du fascicule du brevet:
**01.06.88**

(51) Int. Cl.⁴: **G 05 G 13/00, F 16 H 5/04**

(21) Numéro de dépôt: **85401340.6**

(22) Date de dépôt: **02.07.85**

(54) **Dispositif de commande à câble pour crabotage, notamment pour groupes de transmission de véhicules automobiles et groupe de transmission de véhicule automobile comportant un tel dispositif de commande.**

(30) Priorité: **27.07.84 FR 8412009**

(43) Date de publication de la demande:
**29.01.86 Bulletin 86/5**

(45) Mention de la délivrance du brevet:
**01.06.88 Bulletin 88/22**

(84) Etats contractants désignés:
**DE GB IT**

(56) Documents cités:
**FR - A - 426 657**
**GB - A - 384 513**
**GB - A - 538 110**
**US - A - 2 593 297**
**US - A - 3 605 520**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Chretien, Philippe, 30 rue de la Coutellerie, F-95300 Pontoise (FR)**

(74) Mandataire: **Moncheny, Michel et al, c/o Cabinet Lavoix 2 Place d'Estienne d'Orves, F-75441 Paris Cedex 09 (FR)**

## Description

La présente invention est relative aux dispositifs de commande de crabotage propres à assurer au moins un engrènement, c'est-à-dire l'engagement de deux profils d'accouplement complémentaires respectivement solidaires d'une pièce axialement fixe et d'une pièce coulissant axialement, au moyen d'un mécanisme d'«armement» comportant un ressort dont les deux extrémités sont reliées l'une à un organe de manoeuvre, l'autre à la pièce coulissante.

Dans une première application, la pièce coulissante est, par exemple, un baladeur solidaire en rotation d'un arbre et destiné à être accouplé alternativement à une pièce fixe ou à un second arbre coaxial au précédent, ces deux arbres étant notamment liés à des éléments rotatifs d'un réducteur à train planétaire. Dans une autre application, la pièce coulissante peut être liée en rotation à un arbre de roue d'un essieu d'un véhicule pour être accouplée à un pignon d'entraînement d'un arbre relié aux roues d'un autre essieu du véhicule.

Ces crabotages sont ainsi utilisés dans des groupes de transmission de véhicules à deux essieux moteurs. Le mécanisme d'armement évite l'emploi de synchroniseurs coûteux et relativement délicats. Lors de l'actionnement de l'organe de manoeuvre dans le sens de l'engrènement, en cas de refus d'engagement des profils d'accouplement complémentaires, le ressort d'armement reste contraint jusqu'à ce que, après légère rotation relative des pièces à accoupler, l'engagement s'effectue par détente du ressort, la pièce coulissante étant entraînée axialement par une fourchette portée par un axe, lui-même porté par deux parois d'un carter contenant la fourchette et les pièces à accoupler.

Dans un premier dispositif connu, le ressort d'armement est alors un ressort hélicoïdal enroulé autour de l'axe et prenant appui dun côté sur la fourchette coulissant sur l'axe, et de l'autre côté sur un épaulement ou une saillie de ce dernier, celui-ci étant monté coulissant dans le carter et entraîné axialement par l'organe de manoeuvre. La fourchette portant sur une longueru relativement faible de l'are, son coulissement s'effectue avec d'importants frottements qui nécessitent un fort ressort d'armement et pouvent entraîner un effort de manoeuvre excessif.

Dans un deuxième dispositif connu, la fourchette est fixée sur l'axe qui coulisse librement dans le carter et le ressort d'armement est enroulé autour d'un axe auxiliaire parallèle au précédent et mobile axialement sous l'action de l'organe de manoeuvre, le ressort prenant appui d'un côté sur cet axe auxiliaire et de l'autre côté sur le bras solidaire de la fourchette ou de son axe. Cette disposition est coûteuse et encombrante.

Dans un troisième dispositif connu, la fourchette est fixée sur l'axe coulissant, un extrémité extérieure de celui-ci étant reliée à l'organe de manoeuvre par l'intermédiaire de deux tiges alignées et reliées entre elles par un dispositif coulissant contenant au moins un ressort d'armement. Cette disposition nécessite une place disponible importante entre l'extrémité de l'axe qui coulisse dans le carter et l'organe de manoeuvre. Par ailleurs, une commande à tige est généralement incompatible avec de légers mouvements relatifs pouvant se produire entre le carter et l'organe de manoeuvre, notamment lorsqu'il s'agit d'un groupe de transmission équipant un véhicule automobile.

Enfin, dans un quatrième dispositif, il est connu d'actionner un axe de fourchette au moyen d'un câble le reliant à l'organe de manoeuvre. Une telle commande est éventuellement associée à un mécanisme d'armement contenu dans le carter comme indiqué plus haut, avec les inconvénients mentionnés.

Afin de remédier à ces inconvénients, la présente invention a pour but de fournir un dispositif de commande de crabotage avec armement, notamment pour accoupler deux organes rotatifs reliés respectivement aux roues de deux essieux moteurs d'un véhicule, ou pour changer l'état d'un réducteur sans synchroniseur, au moyen d'un dispositif simple, peu encombrant, et permettant de légers déplacements relatifs entre le carter et l'organe de manoeuvre.

A cet effet, l'invention a pour objet un dispositif de commande pour crabotage destiné à assurer au moins un engrènement entre un manchon baladeur ou baladeur muni d'au moins une série de dentures et une pièce fixe axialement, comprenant un organe de manoeuvre d'un câble qui coulisse dans une gaine maintenue par ses extrémités entre une première butée solidaire d'un carter et une deuxième butée solidaire d'un support de l'organe du manoeuvre, une fourchette fixée à un axe qui est relié au câble et qui coulisse dans le carter, destinée à déplacer axialement le manchon baladeur, et un ressort d'armement pour solliciter le déplacement axial du manchon afin de l'engrener avec la pièce fixe, caractérisé en ce que le ressort d'armement est disposé entre la deuxième butée et l'extrémité correspondante de la gaine et en ce qu'un ressort de rappel est interposé entre une partie du carter et une partie en saillie solidaire de l'axe de manière à assurer la tension permanente du câble.

Suivant d'autres caractéristiques essentielles de l'invention:

le ressort de rappel est hélicoïdal et coaxial à l'axe,

le ressort de rappel est hélicoïdal et coaxial à un axe auxiliaire parallèle à l'axe sur lequel la fourchette est fixée,

le ressort d'armement est hélicoïdal, coaxial au câble, et comprimé entre la deuxième butée et l'extrémité correspondante de la gaine,

l'organe de manoeuvre comporte une poulie sur laquelle s'enroule le câble et un moteur électrique entraînant la poulie par un moyen de transmission irréversible,

la compressibilité du ressort d'armement est supérieure à celle du ressort de rappel,

la compressibilité du ressort de rappel est au moins égale à la course totale de la fourchette,

le baladeur est conçu pour engrener alternativement selon son sens de déplacement, avec l'une ou l'autre de deux pièces axialement fixes, l'armement étant ainsi assuré dans un sens par le ressort d'armement et dans l'autre sens par le ressort de rappel.

L'invention sera mieux comprise à la lecture de la description qui va suivre d'une forme de réalisation donnée uniquement à titre d'exemple et faite en référence aux dessins annexés, sur lesquels:

la Fig. 1 est une vue d'ensemble simplifiée avec coupe transversale partielle du dispositif, conforme à l'invention, équipant un groupe de transmission d'un véhicule à deux essieux moteurs; et

les Fig. 2 à 6 sont des schémas représentant des étapes successives du fontionnement du dispositif.

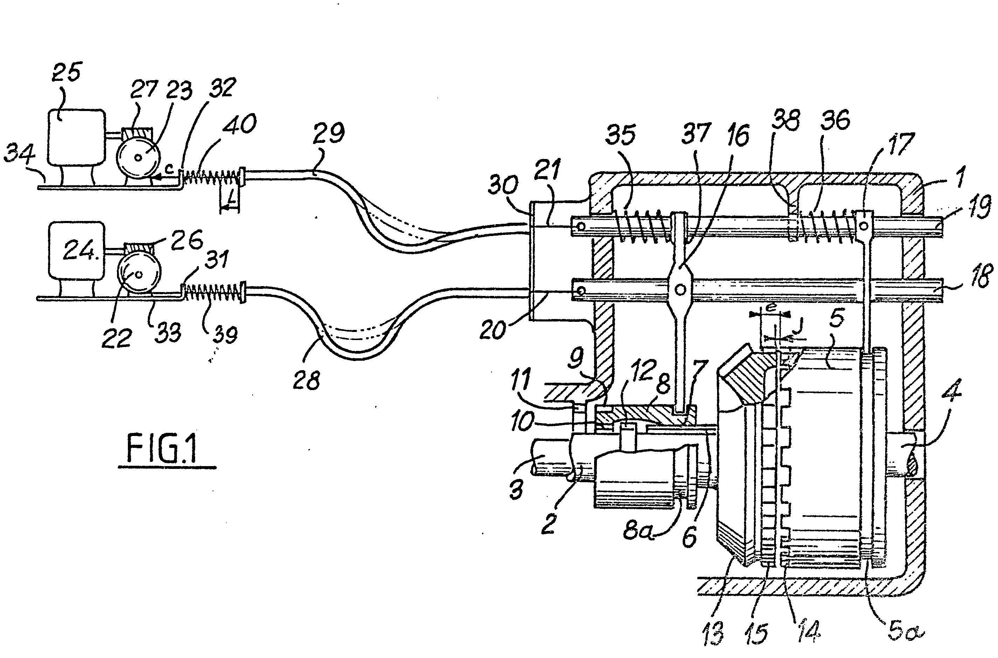

On voit sur la Fig. 1, disposé dans un carter 1 d'un groupe de transmission d'un véhicule, un arbre tubulaire d'entraînement 2 propre à être relié à deux arbres de roue 3, 4 de l'essieu avant par l'intermédiaire d'un réducteur à train planétaire situé à l'intérieur d'une enveloppe cylindrique coulissante 5.

Un élément rotatif de ce réducteur est solidaire d'un arbre tubulaire 6 sur lequel coulisse, au moyen de cannelures complémentaires 7, un manchon baladeur 8 comportant des dentures extérieures 9 et des dentures intérieures 10 propres à s'emboîter respectivement 11 fixée au carter et avec un pignon 12 solidaire de l'arbre 2 selon que le baladeur est déplacé vers la gauche ou vers la droite sur la figure.

L'enveloppe 5 contient en outre, de façon connue non représentée (demande de brevet FR 83 13 554) des engrenages épicycloïdaux qui la relient aux arbres de roue 3, 4 et elle se comporte comme un baladeur propre à entraîner en rotation une roue dentée conique 13 par engrènement d'un bord crénelé 14 de l'enveloppe 5 avec un profil complémentaire 15 taillé sur une extension axiale de la roue 13. Celle-ci coopère avec un pignon conique, non représenté, solidaire d'un arbre d'entraînement des roues de l'essieu arrière du véhicule.

Dans une gorge périphérique 8a, 5a de chacun des baladeurs 8, 5 est engagée une fourchette 16, 17 fixée sur l'un de deux axes parallèles, respectivement 18 et 19, qui coulissent dans deux parois opposées du carter 1. Une extrémité extérieure de chaque axe 18, 19 est reliée respectivement par un câble 20, 21 à une poulie 22, 23 propre à être entraînée en rotation par un moteur électrique 24, 25, par l'intermédiaire d'une vis sans fin 26, 27 qui, dans cet exemple, forme un moyen de transmission irréversible.

Chaque câble 20, 21 coulisse respectivement dans une gaine 28, 29 dont les deux extrémités sont en appui l'une sur une prmière butée commune 30 solidaire du carter, l'autre sur une seconde butée 31, 32 solidaire d'une pièce 33, 34 supportant le moteur et la poulie correspondants.

Deux ressorts de rappel hélicoïdaux 35, 36 enroulés autour de l'axe 19 sont interposés et comprimés l'un 35 entre en bras 37 de la fourchette 16 et le carter 1, l'autre entre l'extrémité de la fourchette 17 fixée sur l'axe 19 et une partie saillante 38 du carter, de manière à assurer une tension permanente des deux câbles 20, 21. En variante, l'appui du ressort de rappel 35, 36 peut s'effectuer non pas directement sur une partie de la fourchette 16, 17 mais sur un épaulement de son axe 18, 19 ou sur une pièce qui en est solidaire.

Un ressort hélicoïdal d'armement 39, 40 enroulé autour de chaque câble 20, 21 est interposé et comprimé entre ladite seconde butée 31, 32 et l'extrémité correspondante de la gaine 28, 29.

A partir de la position représentée à la Fig. 1, où aucun engrènement n'est réalisé, une brève excitation de l'un des moteurs 24, 25 provoque un décalage angulaire de la poulie 22, 23 correspondante. Grâce à l'irréversibilité de la transmission assurée par la vis sans fin 26, 27, la poulie 22, 23 se stabilise dans la position provoquée par le moteur 24, 25.

Dans le cas de la commande de la fourchette 17, une rotation de la poulie 23 dans le sens de l'enroulement du câble 21 provoque une course c de celui-ci au droit de la butée 32, cette course étant supérieure à celle e de l'emboîtement des profils 14 et 15. Il en résulte une traction sur le câble 21 et sur l'axe 19 à l'encontre de la compression du ressort 36, et la fourchette 17 pousse le baladeur 5 vers la gauche sur la Fig. 1.

Si les profils 14, 15 sont correctement alignés, ils s'emboîtent les uns dans les autres par coulissement du baladeur 5 et l'engrènement est réalisé immédiatement, le ressort d'armement 40 se comprimant d'une longueur $L = c-e$. Si les profils 14, 15 butent axialement sans pouvoir s'emboîter, la compression L du ressort d'armement 40 est alors plus importante, égale à $c-j$, j étant le jeu axial initial entre les profils 14 et 15. Il en résulte une déformation de la gaine 29 et un maintien de la tension du câble 21, propre à assurer le coulissement de l'axe 19, donc du baladeur 5, par détente du ressort 40, dès qu'une légère rotation relative entre la roue 13 et le baladeur 5 provoque un alignement des profils 14, 15 et par suite leur emboîtement. L'engrènement est ainsi réalisé grâce à l'armement assuré par la compression du ressort 40. Le désaccouplement de ces profils 14, 15 est obtenu grâce au ressort de rappel 36 dès que la poulie 23 est replacée dans sa position angulaire initiale.

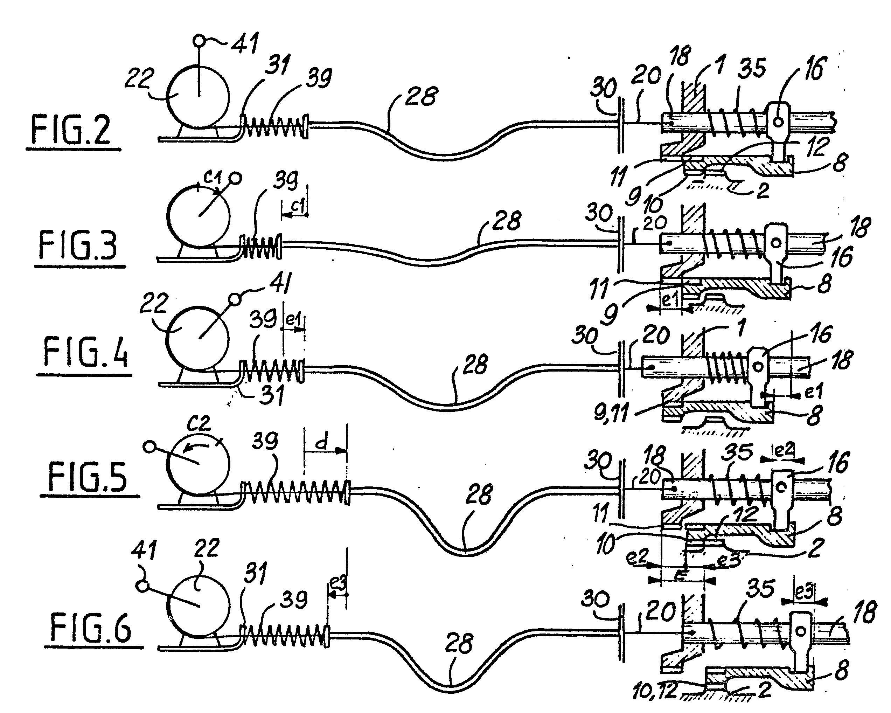

Dans le cas de la fourchette 16, les Fig. 2 à 6 sont simplifiées: le ressort 35 est représenté coaxial à l'axe 18 et l'organe de manoeuvre de la poulie 22 est schématisé par un levier 41. Dans la position neutre initiale de la Fig. 2 correspondant à celle de la Fig. 1, les deux ressorts 35 et 39 sont légèrement comprimés.

A la Fig. 3, la poulie 22 est décalée angulairement de manière à enrouler le câble 20 d'une course $c_1$ supérieure à celle $e_1$ correspondant à l'emboîtement des dentures 9, 11. Le câble 20 tire sur l'axe 18, et la fourchette 16 pousse le baladeur 8 vers la gauche. Les dentures 9 et 11 n'étant pas alignées, le baladeur 8 bute contre la couronne 11. La portion de câble 20 située au droit de la butée 30 reste pratiquement immobile comme l'axe 18, en négligeant le rattrapage du jeu axial initial entre le baladeur 8 et la couronne 11, et le ressort d'armement 39 est comprimé d'une longueur égale à $c_1$. Cette compression du ressort 39 réalise l'armement pour l'emboîtement des dentures 9, 11, qui s'effectue, comme représenté à la Fig. 4, dès que ces dentures 9, 11 sont correctement alignées par suite d'une légère rotation du baladeur 8. Celui-ci coulisse alors d'une longueur $e_1$ et le ressort d'armement 39 se détend d'une même longueur $e_1$.

En manoeuvrant ensuite la poulie 22 de manière à dérouler le câble 20 d'une longueur $c_2$ (Fig. 5) notablement supérieure à la course totale E du baladeur 8 passant d'un engrènement avec la couronne 11 à celui avec l'arbre d'entraînement 2, le ressort de rappel 35 maintien le câble 20 tendu et pousse le baladeur 8 vers la droite jusqu'à ce que les dentures 10, 12, non alignées, se heurtent. La course du baladeur 8 étant ainsi $e_2$ à peine supérieure à celle $e_1$ nécessaire au désaccouplement des dentures 9, 11, l'extrémité du câble 20 liée à l'axe 18 coulisse de cette couse $e_2$ au droit de la butée 30, et le ressort 39 se détend donc d'une longueur $d = c_2 - e_2$. Le ressort 35 reste encore suffisamment comprimé pour réaliser l'armement de l'emboîtement des dentures 10, 12, lequel s'effectue comme représenté à la Fig. 6, dès que ces dentures 10, 12 sont alignées par suite d'une légère rotation relative du baladeur 8 et de l'arbre 2. Le baladeur 8 coulisse alors d'une course $e_3 = E - e_2$, de même que le câble 20 au droit de la butée 30 et le ressort 39 se comprime de la même longueur $e_3$.

En pratique, la position de la Fig. 2 n'est que transitoire, la commande n'affichant alternativement que les deux positions extrêmes de la poulie 22 de manière à utiliser le réducteur planétaire lié au baladeur 8 soit dans un état du réduction, soit dans un état dit de blocage assurant une transmission directe.

Comme le montrent les schémas des Fig. 2 à 6, la compressibilité du ressort de rappel 35 doit être au moins égale à la course totale E du baladeur 8 ou de la fourchette 16 et celle du ressort d'armement 39 doit être encore plus grande pour être au moins égale à la somme des déplacements $e_1$ et $e_3$ visibles aux Fig. 4 et 6, augmentée de l'allongement de ce ressort 39, entre la position de la Fig. 4 et celle de la Fig. 6, ceci étant dû au fait que dans le cas de cette dernière figure, le ressort de rappel 35 étant en état de moindre compression, il en est de même pour le ressort d'armement 39; c'est la raison pour laquelle la course c du câble 20 est notablement supérieure à celle E du baladeur 8.

Le dispositif décrit permet de réaliser plusieurs engrènements avec armement au moyen d'un câble de transmission autorisant diverses positions relatives, voire de légers déplacements relatifs, entre le carter 1 et le support 33 ou 34, ce qui est avantageux dans un véhicule automobile où le carter est suspendu élastiquement à la structure portant les supports 33, 34. Par ailleurs, il utilise des fourchettes fixées à leur axe donc coulissant avec un minimum de frottement, et l'armement s'effectue simplement puisqu'il n'implique pas le montage connu antérieurement de tiges coulissantes complémentaires portant des ressorts d'armement.

**Revendications**

1. Dispositif de commande pour crabotage destiné à assurer au moins un engrènement entre un manchon baladeur ou baladeur (5, 8), muni d'au moins une série de dentures (9, 10, 14), et une pièce fixe (1, 2, 13) axialement, comprenant un organe de manoeuvre (22, 24, 26, 23, 25, 27) d'un câble (20, 21) qui coulisse dans une gaine (28, 29) maintenue par ses extrémités entre une première butée (30) solidaire d'un carter (1) et une deuxième butée (31, 32) solidaire d'un support (33, 34) de l'organe de manoeuvre, une fourchette (16, 17) fixée à un axe (18, 19) qui est relié au câble (20, 21) et qui coulisse dans le carter (1), destinée à déplacer axialement le manchon baladeur (5, 8) et un ressort d'armement (39, 40) pour solliciter le déplacement axial du manchon (5, 8) afin de l'engréner avec la pièce fixe (1, 2, 13), caractérisé en ce que le ressort d'armement (39, 40) est disposé entre la deuxième butée (31, 32) et l'extrémité correspondante de la gaine (29, 29) et en ce qu'un ressort de rappel (35, 36) est interposé entre une partie du carter (1) et une partie en saillie solidaire de l'axe (18, 19) de manière à assurer la tension permanente du câble (20, 21).

2. Dispositif suivant la revendication 1, caractérisé en ce que le ressort de rappel (35) est hélicoïdal et coaxial à un axe auxiliaire (19) parallèle à l'axe (18) sur lequel la fourchette (16) est fixée.

3. Dispositif suivant la revendication 2, caractérisé en ce que la partie en saillie, solidaire de l'axe (18) sur laquelle le ressort de rappel (35) prend appui est un bras (37) de la fourchette (16).

4. Dispositif suivant l'une quelconque des revendications précédentes, caractérisé en ce que le ressort d'armement (39, 40) est hélicoïdal, coaxial au cable (20, 21), et comprimé entre la deuxième butée (31, 32) et l'extrémité correspondante de la gaine (28, 29).

5. Dispositif suivant l'une quelconque des revendications précédentes, caractérisé en ce que l'organe de manoeuvre comporte une poulie (22, 23) sur laquelle s'enroule le câble (20, 21) et un moteur électrique (24, 25) entraînant la polie (22, 23) par un moyen de transmission irréversible.

6. Dispositif suivant l'une quelconque des revendications 1 à 5, caractérisé en ce que la compressibilité du ressort d'armement (39, 40) est supérieure à celle du ressort de rappel (35, 36).

7. Dispositif suivant l'une quelconque des revendications précédentes, caractérisé en ce que le baladeur (8) est conçu pour engrener alternativement, selon son sens de déplacement, avec l'une ou l'autre de deux pièces (1, 2) axialement fixes, l'armement étant assuré dans un sens par le ressort d'armement (39) et dans l'autre sens par le ressort de rappel (36).

8. Groupe de transmission de véhicule automobile à deux essieux moteurs comprenant dans un carter (1), un arbre d'entraînement (2) propre à être relié à deux arbres de roue (3, 4) de l'essieu avant par l'intermédiaire d'un réducteur qui est situé à l'intérieur d'une enveloppe cylindrique coulissante (5) et dont un élément rotatif est solidaire d'un arbre (6) sur lequel coulisse, au moyen de cannelures complémentaires (7), un manchon baladeur (8) muni de dentures éxterieures (9) et de dentures intérieures (10) propres à s'emboîter respectivement et alternativement avec une couronne dentée (11) fixée au carter (1) et avec un pignon (12) solidaire de l'arbre (2), une roue dentée conique (13) munie de dentures (15) coopérant avec un pignon conique solidaire d'un arbre d'entraînement de l'essieu arrière, l'enveloppe cylindrique coulissante (5) se comportant comme un baladeur propre à entraîner en rotation la roue dentée (13), caractérisé en ce que le manchon baladeur (8) coopère avec un dispositif de commande tel que revendiqué suivant l'une quelconque des revendications 1 à 7 et en ce que l'enveloppe cylindrique (5) coopère avec un dispositif de commande tel que revendiqué suivant l'une quelconque des revendications 1 et 4 à 6 dépendant de la revendications 1.

## Patentansprüche

1. Klauenkupplungsbetätigungsvorrichtung, bestimmt zum Sicherstellen wengistens eines Eingriffs zwischen einer Schubgliedmuffe oder einem Schubglied (5, 8), das mit wenigstens einer Reihe von Verzahnungen (9, 10, 14) versehen ist, und einem festen Teil (1, 2, 13) in axialer Richtung, aufweisend ein Bedienungsorgan (22, 24, 26, 23, 25, 27) für ein Kabel (20, 21), das sich in einer Schutzhülle (28, 29) verschiebt, die mittels ihrer Enden zwischen einem fest mit einem Gehäuse (1) verbundenen ersten Anschlag (30) und einem fest mit einer Abstützung (33, 34) des Bedienungsorgans verbundenen zweiten Anschlag (31, 32) gehalten ist, eine Gabel (16, 17) die an einer Achse (18, 19) befestigt ist, die mit dem Kabel (20, 21) verbunden ist und die sich in dem Gehäuse (1) verschiebt, bestimmt zum axialen Verstellen der Schubgliedmuffe (5, 8) und eine Spannfeder (39, 40) zum Beanspruchen der axialen Verstellung der Muffe (5, 8), um diese mit dem festen Teil (1, 2, 13) in Eingriff zu bringen, dadurch gekennzeichnet, dass die Spannfeder (39, 40) zwischen dem zweiten Anschlag (31, 32) und dem entsprechenden Ende der Schutzhülle (28, 29) angeordnet ist und dass eine Rückholfeder (35, 36) zwischen einem Teil des Gehäuses (1) und einem vorspringenden, fest mit der Achse (18, 19) verbundenen Teil derart angeordnet ist, dass die Dauerspannung des Kabels (20, 21) sichergestellt ist.

2. Vorrichtung nach Anspruch 1, dadurch gekennzeichnet, dass die Rückholfeder (35) schraubenförmig und koaxial zu einer Zusatzachse (19) parallel zur Achse (18) ist, an der die Gabel (16) befestigt ist.

3. Vorrichtung nach Anspruch 2, dadurch gekennzeichnet, dass der vorspringende, fest mit der Achse (18) verbundene Teil, auf dem die Rückholfeder (35) Auflager nimmt, ein Arm (37) der Gabel (16) ist.

4. Vorrichtung nach einem beliebigen der vorhergehenden Ansprüche, dadurch gekennzeichnet, dass die Spannfeder (39, 40) schraubenförmig, zum Kabel (20, 21) koaxial ist und zwischen dem zweiten Anschlag (31, 32) und dem entsprechenden Ende der Schutzhülle (28, 29) zusammengedrückt ist.

5. Vorrichtung nach einem beliebigen der vorhergehenden Ansprüche, dadurch gekennzeichnet, dass das Bedienungsorgan eine Scheibe (22, 23), auf der sich das Kabel (20, 21) aufwickelt, und einen Elektromotor (24, 25) umfasst, der die Scheibe (22, 23) mittels eines irreversiblen Übertragungsmittels antreibt.

6. Vorrichtung nach einem beliebigen der Ansprüche 1 bis 5, dadurch gekennzeichnet, dass die Zusammendrückbarkeit der Spannfeder (39, 40) grösser als diejenige der Rückholfeder (35, 36) ist.

7. Vorrichtung nach einem beliebigen der vorhergehenden Ansprüche, dadurch gekennzeichnet, dass das Schubglied (8) gebaut ist, um abwechselnd gemäss seiner Verstellrichtung mit dem einen oder anderen der beiden axial festen Teile (1, 2) in Eingriff zu treten, wobei die Spannung in einer Richtung durch die Spannfeder (39) und in der anderen Richtung durch die Rückholfeder (36) sichergestellt ist.

8. Kraftfahrzeug-Gruppengetriebe mit zwei Antriebsachsen, aufweisend ein Gehäuse 1, eine Antriebswelle 2, die geeignet ist, mit zwei Randwellen (3, 4) der Vorderachse mittels eines Untersetzungsgetriebes verbunden zu werden, das im Inneren einer sich verschiebenden zylindrischen Umhüllung (5) liegt und von dem ein Drehelement fest mit einer Welle (6) verbunden ist, auf der sich mittels komplementärer Rillen (7) eine Schubgliedmuffe (8) verschiebt, die mit Aussenverzahnungen (9) und Innenverzahnungen (10) ausgestattet ist, die geeignet sind, sich jeweils und abwechselnd in einen am Gehäuse (1) befestigten Zahnring (11) und in ein fest mit der Welle (2) verbundenes Zahnrad (12) einzufügen, ein Kegelzahnrad (13), das mit Verzahnungen (15) versehen ist, die mit einem fest mit einer Antriebswelle der Hinterachse verbundenen Kegelzahnrad zusammenwirkt, wobei sich die verschiebende zylindrische Umhüllung (5) wie ein Schubglied verhält, das geeignet ist, in Rotation das Zahnrad (13) anzutreiben, dadurch gekennzeichnet, dass die Schubgliedmuffe (8) mit einer Betätigungsvorrichtung zusammenwirkt, wie sie nach einem beliebigen der Ansprüche 1 bis 7 beansprucht ist, und dass die zylindrische Umhüllung (5) mit einer Betätigungseinrichtung zusammenwirkt, wie sie nach einem beliebigen der Ansprüche 1 und 4 bis 6 abhängig vom Anspruch 1 beansprucht worden ist.

## Claims

1. A dog clutch control device adapted to ensure at least one meshing between a sliding sleeve (5, 8) having at least one series of toothings (9, 10, 14) an an axially fixed element (1, 2, 13), comprising and operating system (22, 24, 26, 23, 25, 27) for a cable (20, 21) which slides in a sheath (28, 29) retained by its ends between a first stop (30) connected to a casing (1) and a second stop (31, 32) connected to a support (33, 34) of the operating system; a fork (16, 17) attached to a shaft (18, 19) which is connected to the cable (20, 21) and which slides in the casing (1), said fork being adapted to displace the sliding sleeve (5, 8) axially; and a setting spring (39, 40) to urge the axial displacement of the sleeve (5, 8) to mesh it with the fixed member (1, 2, 13), characterized in that the setting spring (39, 40) is disposed between the second stop (31, 32) and the corresponding end of the sheath (28, 29) and a return spring (35, 36) is so interposed between a portion of the casing (1) and a projecting portion connected to the shaft (18, 19) as to ensure that the cable (20, 21) is permanently tensioned.

2. A device according to claim 1, characterized in that the return spring (35) is helical and coaxial with an auxiliary shaft (19) parallel with the shaft (18) to which the fork (16) is attached.

3. A device according to claim 2, characterized in that the projecting portion connected to the shaft (18) against with the return spring (35) bears is an arm (37) ont the fork (16).

4. A device according to any of the preceding claims, characterized in that the setting spring (39, 40) is helical, coaxial with the cable (20, 21), and compressed between the second stop (31, 32) and the corresponding end of the sheath (28, 29).

5. A device according to any of the preceding claims, characterized in that the operating system comprises a pulley (22, 23) on which the cable (20, 21) is wound and an electric motor (24, 25) driving the pulley (22, 23) via an irreversible transmission means.

6. A device according to any of claims 1 to 5, characterized in that the compressibility of the setting spring (39, 40) is greater than that of the return spring (35, 36).

7. A device according to any of the preceding claims, characterized in that the sliding sleeve (8) is designed to mesh alternately, in dependece on its direction of displacement, with one or the other of two axially fixed members (1, 2), setting being ensured in one direction by the setting spring (39) and in the other direction by the return spring (36).

8. A transmission group for a motor vehicle having two driving axles comprising in a casing (1) a drive shaft (2) adapted to be connected to two wheel shafts (3, 4) of the front axle via a reducing grear which is disposed inside a sliding cylindrical envelope (5) and onre rotary element of which is connected to a shaft (6) on which a sliding sleeve (8) slides via matching splinings (7) which has external toothings (9) and internal toothings (10) adapted to fit respectively and alternatively with a toothed rim (11) attached to the casing (1) and with a pinion (12) connected to the shaft (2), a conical toothed wheel (13) having toothings (15) cooperating with a conical pinion connected to a drive shaft of the rear axle, the sliding cylindrical envelope (5) behaving like a sliding shaft adapted to rotatably drive the toothed wheel (13), characterized in that the sliding sleeve (8) cooperates with a control device as claimed in any of claims 1 to 7 and the cylindrical envelope (5) cooperates with a control device as claimed in any of claims 1 and 4 to 6, which depend on claim 1.

FIG.1

FIG.2

FIG.3

FIG.4

FIG.5

FIG.6

0 169 769